# EUROPEAN PATENT APPLICATION

(11) **EP 4 819 348 A1**
(43) Date of publication of application: **07.10.2026**
(21) Application number: 24895434.9
(22) Date of filing: 15.05.2024
(51) Int. Cl.: H01M 50/40, H01M 50/457, H01M 50/489, H01M 50/423, H01M 50/414, H01M 10/052

(54) **BATTERY SEPARATOR AND PREPARATION METHOD, AND BATTERY**

(30) Priority: 28.11.2023 CN 202311608351
(71) Applicant: SVOLT Energy Technology Co., Ltd., Changzhou, Jiangsu 213200 (CN)
(72) Inventor: YANG, Yingli, hangzhou, Jiangsu 213200 (CN); JIAO, Lingkuan, hangzhou, Jiangsu 213200 (CN); ZHANG, Zhongdong, hangzhou, Jiangsu 213200 (CN); CHEN, Hui, hangzhou, Jiangsu 213200 (CN); LIU, Jing, hangzhou, Jiangsu 213200 (CN); SHENG, Jie, hangzhou, Jiangsu 213200 (CN); YANG, Hongxin, hangzhou, Jiangsu 213200 (CN)
(74) Representative: Michalski Hüttermann & Partner mbB
(86) International application number: PCT/CN2024/093396
(87) International publication number: WO 2025/112323

(57) **Abstract**

A battery separator and a preparation method, and a battery. The battery separator comprises a base membrane, a first bonding layer, a heat-resistant layer, and a second bonding layer. The first bonding layer has a first thickness H₁ µm, and has a first coverage rate C₁% for the base membrane, the heat-resistant layer has a second thickness H₂ µm, the second bonding layer has a third thickness H₃ µm, and has a second coverage rate C₂ % for the heat-resistant layer, and it is satisfied that: H₂>H₁+H₃, C₂=(0.6-1.2)*(H₁+H₃)/H₂%, and C₁=(0.1-0.3)*H₂/H₁%.

## Description

This application claims priority to Chinese Patent Application No. 202311608351.6, filed with the China National Intellectual Property Administration on November 28, 2023, entitled "BATTERY SEPARATOR, PREPARATION METHOD THEREFOR, BATTERY, AND ELECTRIC DEVICE", the contents of which are incorporated herein by reference in entirety.

### TECHNICAL FIELD

The present application relates to, but is not limited to, the technical field of batteries.

### BACKGROUND

With the promotion and development of new energy vehicles, the stacking process has become a rising star in the internal forming process of lithium batteries due to its advantageous characteristics such as high volume utilization, high efficiency, stable structure, low internal resistance, and long cycle life. In the thermal lamination stacking process, a negative electrode and a separator of a battery are pressed together at a certain temperature to form one unit, which is then integrated with a positive electrode sheet. This method can effectively increase production speed because it combines electrode sheet die-cutting and stacking, simplifying production steps and significantly improving efficiency.

### SUMMARY

In a first aspect, the present application provides a battery separator, including: a base membrane; a first bonding layer located on a side of the base membrane, the first bonding layer having a first thickness H1 in µm, and the first bonding layer having a first coverage rate C1 in % with respect to the base membrane; a heat-resistant layer located on a side of the base membrane away from the first bonding layer, the heat-resistant layer having a second thickness H2 in µm; and a second bonding layer located on a side of the heat-resistant layer away from the base membrane, the second bonding layer having a third thickness H3 in µm, and the second bonding layer having a second coverage rate C2 in % with respect to the heat-resistant layer, wherein H2>H1+H3, C2=(0.6 to 1.2)*(H1+H3)/H2%, and C1=(0.1 to 0.3)*H2/H1% are satisfied.

Optionally, the first thickness H1 of the first bonding layer ranges from 0.5 µm to 1.5 µm.

Optionally, the second thickness H2 of the heat-resistant layer ranges from 1.5 µm to 3 µm.

Optionally, the third thickness H3 of the second bonding layer ranges from 0.5 µm to 1 µm.

Optionally, the first coverage rate C1 ranges from 30% to 50%.

Optionally, the second coverage rate C2 ranges from 40% to 60%.

Optionally, a material of the first bonding layer includes polyvinylidene fluoride.

Optionally, a material of the heat-resistant layer includes a bimetallic oxide and fibrous polyimide.

Optionally, a material of the second bonding layer includes a non-fluorine polyacrylate.

Optionally, the polyvinylidene fluoride has a primary particle size ranging from 100 nm to 300 nm.

Optionally, a mass ratio of the bimetallic oxide to the fibrous polyimide is (1.3 to 3):1.

Optionally, the bimetallic oxide is a zinc-aluminum oxide or a magnesium-aluminum oxide.

Optionally, the bimetallic oxide has a Dv50 ranging from 200 nm to 500 nm.

Optionally, a length-to-diameter ratio of the fibrous polyimide ranges from 2.5 to 10.

Optionally, a diameter of the fibrous polyimide ranges from 100 nm to 200 nm, and a length of the fibrous polyimide ranges from 500 nm to 1000 nm.

Optionally, the non-fluorine polyacrylate includes one or more of styrene-methyl methacrylate copolymer, styrene-ethyl acrylate copolymer, and homopolymer or copolymer of 2-ethylhexyl acrylate.

Optionally, the non-fluorine polyacrylate has a primary particle size ranging from 200 nm to 500 nm.

In a second aspect, the present application further provides a preparation method for a battery separator, including steps of: providing a base membrane; preparing a first bonding layer, the first bonding layer being located on a side of the base membrane; preparing a heat-resistant layer, the heat-resistant layer being located on a side of the base membrane away from the first bonding layer; and preparing a second bonding layer, the second bonding layer being located on a side of the heat-resistant layer away from the base membrane, wherein thicknesses of the base membrane, the first bonding layer, the heat-resistant layer, and the second bonding layer satisfy the following formulas: H2>H1+H3, C2=(0.6 to 1.2)*(H1+H3)/H2%, and C1=(0.1 to 0.3)*H2/H1%.

In a third aspect, the present application further provides a battery, including a positive electrode sheet, a negative electrode sheet, and a battery separator, wherein the battery separator is the battery separator in any of the embodiments described above; or the battery separator is prepared by the preparation method for a battery separator described above.

In a fourth aspect, the present application further provides an electric device, including the battery in the embodiment described above.

### BRIEF DESCRIPTION OF THE DRAWINGS

The technical solutions and other beneficial effects of the present application will become apparent from the following detailed description of specific embodiments of the present application with reference to the drawings.
FIG. 1 is a schematic structural view of a battery separator provided in an embodiment of the present application.
FIG. 2 is a schematic structural view of a battery separator provided in a comparative example of the present application.

### DETAILED DESCRIPTION OF THE EMBODIMENTS

The technical solutions in the embodiments of the present application will be clearly and completely described below with reference to the drawings in the embodiments of the present application. It is apparent that only some but not all the embodiments of the present application are described. All the other embodiments obtained by those skilled in the art in light of the embodiments of the present application without making inventive efforts will fall within the scope of protection of the present application.

The following disclosure provides many different embodiments or examples for implementing different structures of the present application. To simplify the disclosure of the present application, components and arrangements of specific examples are described below. Certainly, they are merely examples and are not intended to limit the present application.

In the thermal lamination stacking process, the separator coating used is an oxide or a mixture of boehmite and large spherical particles, which exhibits poor heat resistance and poor high-temperature membrane rupture resistance. For cells with high safety requirements, it is difficult to meet the thermal propagation and hot box requirements for the cells. During use, there is a risk of detachment of spherical materials, thereby leading to poor bonding with the negative electrode sheet. Additionally, a powder shedding phenomenon may occur during friction with rollers, which results in an increased risk of introducing foreign matters into the cells.

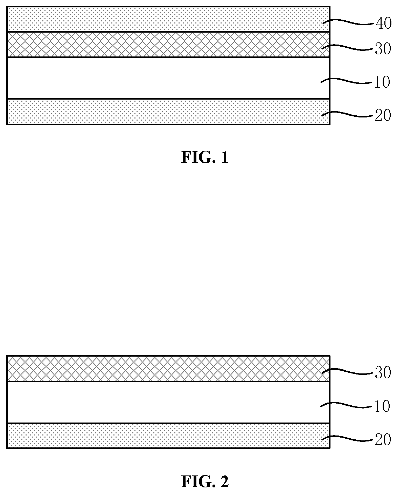

A first embodiment of the present application provides a battery separator, as shown in FIG. 1, including: a base membrane 10; a first bonding layer 20, located on a side of the base membrane 10, the first bonding layer 20 having a first thickness H1 in µm, and the first bonding layer 20 having a first coverage rate C1 in % with respect to the base membrane 10; a heat-resistant layer 30, located on a side of the base membrane 10 away from the first bonding layer 20, the heat-resistant layer 30 having a second thickness H2 in µm; and a second bonding layer 40, located on a side of the heat-resistant layer 30 away from the base membrane 10, the second bonding layer having a third thickness H3 in µm, and the second bonding layer having a second coverage rate C2 in % with respect to the heat-resistant layer 30, wherein H2>H1+H3, C2=(0.6 to 1.2)*(H1+H3)/H2%, and C1=(0.1 to 0.3)*H2/H1% are satisfied.

An asymmetric separator structure is provided in such a manner that the first bonding layer 20 is provided on a side of the battery separator that is brought into contact with a positive electrode, and a double-layer structure consisting of the heat-resistant layer 30 and the second bonding layer 40 is provided on a side of the battery separator that is brought into contact with a negative electrode, and meanwhile the three functional layers are configured to satisfy the following relationships: H2>H1+H3, C2=(0.6 to 1.2)*(H1+H3)/H2%, and C1=(0.1 to 0.3)*H2/H1%, so that the battery separator exhibits excellent heat resistance, improving the overall safety of the battery. In addition, in the process of laminating the separator with the electrode sheets, the bonding requirements are met after they pass through thermal lamination rollers, thereby effectively avoiding the powder shedding phenomenon caused by passage of the separator and the electrode sheets through the rollers.

In some embodiments, the first thickness H1 of the first bonding layer 20 ranges from 0.5 µm to 1.5 µm. It can be understood that the value of H1 (in unit of µm) may be any one of 0.5, 0.7, 0.9, 1.1, 1.3, and 1.5, or in a range between any two of these values. The first bonding layer 20 is used for achieving bonding of the battery separator to the positive electrode of the battery. When the first thickness H1 satisfies the above value range, it can be ensured that the first bonding layer 20 has an ideal bonding force.

In some embodiments, the second thickness H2 of the heat-resistant layer 30 ranges from 1.5 µm to 3 µm. It can be understood that the value of H2 (in unit of µm) may be any one of 1.5, 2.0, 2.5, and 3.0, or in a range between any two of these values. When the second thickness H2 satisfies the above value range, it can be ensured that the heat-resistant layer 30 offers a relatively high membrane rupture temperature and relatively low thermal shrinkage.

In some embodiments, the third thickness H3 of the second bonding layer 40 ranges from 0.5 µm to 1 µm. It can be understood that the value of H3 (in unit of µm) may be any one of 0.5, 0.6, 0.7, 0.8, 0.9, and 1, or in a range between any two of these values. The second bonding layer 40 is used for achieving bonding of the battery separator to the negative electrode of the battery. When the third thickness H3 satisfies the above value range, it can be ensured that the second bonding layer 40 has an ideal bonding force.

In some embodiments, the coverage rate of the first bonding layer 20 ranges from 30% to 50%.

In some embodiments, the coverage rate of the second bonding layer 40 ranges from 40% to 60%. It can be understood that the value of C1 may be any one of 30%, 35%, 40%, 45%, and 50%, or in a range between any two of these values, and the value of C2 may be any one of 40%, 45%, 50%, 55%, and 60%, or in a range between any two of these values. When the coverage rate of the first bonding layer 20 or the second bonding layer 40 satisfies the above value range, a relatively good bonding effect is achieved.

In some embodiments, the material of the first bonding layer 20 includes polyvinylidene fluoride (PVDF).

In some embodiments, the material of the heat-resistant layer 30 includes a bimetallic oxide and fibrous polyimide (PI). The bimetallic oxide has a layered structure, which facilitates transport of lithium ions and adsorption of manganese ions in the battery, and prevents dissolution of manganese ions from the positive electrode during operation of the battery from damaging the SEI and thus causing loss of active lithium. Meanwhile, the bimetallic oxide possesses thermal stability and can maintain structural stability even under high-temperature conditions. PI has excellent heat resistance, with a heat-resistant temperature as high as 400 °C. The selection and use of the fibrous polyimide modified with hydrophobic groups can ameliorate the water-absorption property of conventional polyimide while retaining heat resistance, preventing the heat-resistant layer 30 from absorbing moisture.

In some embodiments, the material of the second bonding layer 40 includes a non-fluorine polyacrylate. The non-fluorine polyacrylate is not only lower in cost than PVDF, but also can have a bonding force at least double that of PVDF. While achieving satisfactory bonding effect between the battery separator and the battery negative electrode and ensuring no material shedding of the negative electrode during the bonding, the amount used can be reduced, lowering the cost.

In some embodiments, the polyvinylidene fluoride has a primary particle size ranging from 100 nm to 300 nm. It can be understood that the value (in unit of nm) of the primary particle size of polyvinylidene fluoride may be any one of 100, 150, 200, 250, and 300, or in a range between any two of these values.

In some embodiments, a mass ratio of the bimetallic oxide to the fibrous polyimide is (1.3 to 3):1. It can be understood that the mass ratio of the bimetallic oxide to the fibrous polyimide may be any one of 1.3, 1.5, 2, 2.5, and 3, or in a range between any two of these values.

In some embodiments, the bimetallic oxide is a zinc-aluminum oxide or a magnesium-aluminum oxide.

In some embodiments, the bimetallic oxide has a Dv50 ranging from 200 nm to 500 nm, where Dv50 is a corresponding particle size when the bimetallic oxide particles reach a cumulative volumetric percentage of 50%. It can be understood that the value of the Dv50 (in unit of nm) of the bimetallic oxide may be any one of 200, 250, 300, 350, 400, 450, and 500, or in a range between any two of these values. As one of the main materials of the heat-resistant layer 30, the magnitude of the particle size of the bimetallic oxide affects the heat resistance of the coating. When the particle size is relatively large, it affects the packing density of the coating and hence affects the heat resistance. When the particle size of the bimetallic oxide satisfies the above value range, thermal shrinkage can be effectively reduced.

In some embodiments, the length-to-diameter ratio of the fibrous polyimide ranges from 2.5 to 10. It can be understood that the value of the length-to-diameter ratio of the fibrous polyimide may be any one of 2.5, 4, 5.5, 7, 8.5, and 10, or in a range between any two of these values.

In some embodiments, the diameter of the fibrous polyimide ranges from 100 nm to 200 nm, and the length of the fibrous polyimide ranges from 500 nm to 1000 nm. It can be understood that the value (in unit of nm) of the diameter of the fibrous polyimide may be any one of 100, 120, 140, 160, 180, and 200, or in a range between any two of these values, and the value (in unit of nm) of the length of the fibrous polyimide may be any one of 500, 600, 700, 800, 900, and 1000, or in a range between any two of these values. When the length-to-diameter ratio of the fibrous polyimide in the heat-resistant layer 30 satisfies the above value range, a network structure can be constructed. Meanwhile, the bimetallic oxide serves as a filler in the network structure. The cooperation between the two enables the battery separator to not only maintain an intact shape under high-temperature conditions, but also significantly increase the membrane rupture temperature, improving the safety of the battery.

In some embodiments, the non-fluorine polyacrylate includes one or more of styrene-methyl methacrylate copolymer, styrene-ethyl acrylate copolymer, and homopolymer or copolymer of 2-ethylhexyl acrylate.

In some embodiments, the non-fluorine polyacrylate has a primary particle size ranging from 200 nm to 500 nm. It can be understood that the value (in unit of nm) of the primary particle size of the non-fluorine polyacrylate may be any one of 200, 300, 400, and 500, or in a range between any two of these values.

A second embodiment of the present application provides a preparation method for a battery separator, including steps of: providing a base membrane 10; preparing a first bonding layer 20, the first bonding layer 20 being located on a side of the base membrane 10; preparing a heat-resistant layer 30, the heat-resistant layer 30 being located on a side of the base membrane 10 away from the first bonding layer 20; and preparing a second bonding layer 40, the second bonding layer 40 being located on a side of the heat-resistant layer 30 away from the base membrane 10, where thicknesses of the base membrane 10, the first bonding layer 20, the heat-resistant layer 30, and the second bonding layer 40 satisfy: H2>H1+H3, C2=(0.6 to 1.2)*(H1+H3)/H2%, and C1=(0.1 to 0.3)*H2/H1%.

Specifically, the preparation method for the battery separator can be implemented through the following steps: S1: selecting the base membrane 10; S2: preparing the first bonding layer 20, where PVDF, carboxymethyl cellulose (CMC), a binder, and a dispersant are formulated at a certain ratio into an aqueous solution, which is coated onto one side of the base membrane 10 and baked to obtain the first bonding layer 20; S3: preparing the heat-resistant layer 30, where a bimetallic oxide, fibrous PI, a dispersant, CMC, a binder, and a wetting agent are formulated at a certain ratio into an aqueous solution, which is coated onto the other side of the base membrane 10 and baked to obtain the heat-resistant layer 30; S4: preparing the second bonding layer 40, where a non-fluorine polyacrylate, CMC, a binder, and a dispersant are formulated at a certain ratio into an aqueous solution, which is coated onto the surface of the heat-resistant layer 30 and baked to obtain the second bonding layer 40, thereby completing the preparation of the battery separator.

Herein, the binder used in the above preparation method may be polyacrylonitrile-polymethacrylic acid or styrene-butadiene rubber (SBR); and the dispersant may be sodium polyacrylate.

A third embodiment of the present application provides a battery, including a positive electrode sheet, a negative electrode sheet, and the battery separator in any of the above embodiments between the positive electrode sheet and the negative electrode sheet.

A fourth embodiment of the present application provides an electric device, including the battery in the above embodiment.

The battery provided in the present application is described below with reference to specific examples.

### Example 1

This example provides a battery separator, a battery, and respective preparation methods therefor.

As shown in FIG. 1, the battery separator includes a base membrane 10, a first bonding layer 20, a heat-resistant layer 30, and a second bonding layer 40. Herein, the first bonding layer 20 is located on one side of the base membrane 10, the heat-resistant layer 30 is located on the other side of the base membrane 10, and the second bonding layer 40 is located on a surface of one side of the heat-resistant layer 30 away from the base membrane 10.

The battery separator in this example was prepared by the following method:
S1: A wet-process base membrane was selected and used as the base membrane 10, with a thickness of 9 µm and a porosity of 40%.
S2: Preparation of the first bonding layer 20: PVDF manufactured by HEC Group was selected and used, with an average particle size of 190 nm. The raw materials were mixed at a weight percentage ratio of PVDF : CMC : polyacrylonitrile-polymethacrylic acid : SBR : sodium polyacrylate = 84% : 0.8% : 7.6% : 0.9% : 6.7%, and water was used as a solvent to formulate a slurry at a slurry solid content of 6% . The prepared slurry was coated onto one side of the base membrane 10 using a gravure roller and baked under the condition of 65 °C for 5 min to obtain the first bonding layer 20, with a layer thickness of 0.8 µm and a coverage rate of 40%.
S3: Preparation of the heat-resistant layer 30: A zinc-aluminum oxide with a Dv50 of 300 nm and modified fibrous PI with a diameter of 150 nm and a length of 700 nm were selected. The raw materials were mixed at a weight percentage ratio of zinc-aluminum oxide : fibrous PI : dispersant : CMC : binder : wetting agent = 54.69% : 36.46% : 0.42% : 1.12% : 7.18% : 0.13%, and water was used as a solvent to formulate a slurry at a slurry solid content of 35%. The prepared slurry was coated onto the other side of the base membrane 10 using a gravure roller and baked under the condition of 75 °C for 5 min to obtain the heat-resistant layer 30, with a layer thickness of 2 µm.
S4: Preparation of the second bonding layer 40: Styrene-methyl methacrylate copolymer with a primary particle size of 300 nm was selected. The raw materials were mixed at a weight percentage ratio of styrene-methyl methacrylate copolymer: CMC: binder : dispersant = 84% : 0.8% : 8.5% : 6.7%, and water was used as a solvent to formulate a slurry at a slurry solid content of 6% . The prepared slurry was coated onto the surface of the heat-resistant layer 30 using a gravure roller and baked under the condition of 75 °C for 5 min to obtain the second bonding layer 40, with a layer thickness of 0.7 µm and a coverage rate of 50%, completing the preparation of the battery separator.

The battery was prepared using the above battery separator through the following steps:
1) Preparation of the positive electrode sheet: A slurry was formulated using lithium iron phosphate as a main material, with the remainder including PVDF, a conductive agent, etc. The positive electrode active material accounted for 95.6% of the coating. The formulated slurry was coated onto a carbon-coated aluminum foil to obtain the positive electrode sheet.
2) Preparation of the negative electrode sheet: A slurry was formulated using artificial graphite, CMC, a conductive agent, and SBR. The slurry was coated onto a copper foil and processed to obtain the negative electrode sheet. The negative electrode active material accounted for 95.5% of the coating.
3) Preparation of the separator-negative electrode single piece: The battery separator and the negative electrode sheet were bonded by a thermal lamination process using hot pressing with hot rollers. The temperature of the hot rollers was 90 °C. The unit formed after hot pressing was cut into single pieces using a hot cutter to form a separator-negative electrode-separator single-piece structure.
4) Preparation of an electrode assembly: The separator-negative electrode single piece and the positive electrode sheet were stacked by lamination to form the electrode assembly, which was hot-pressed at 90 °C using a hot press to complete the fabrication of the electrode assembly.
5) Encapsulation and electrolyte injection: The prepared electrode assembly was encapsulated in a pouch form, into which an electrolyte was then injected.
6) Pre-charging and formation: The cell was subjected to pre-charging and formation to obtain the battery of the present invention.

### Examples 2 to 13

The battery separators and batteries provided in Examples 2 to 13 had the same structure, and were adjusted only in terms of structural parameters and material parameters.

The relevant structural parameters of the battery separators of Examples 1 to 13 are listed in Table 1, and the material parameters are listed in Table 2.

**Table 1**

| | First Bonding Layer | | Heat-resistant Layer | Second Bonding Layer | |
|---|---|---|---|---|---|
| | Thickness H₁ (µm) | Coverage Rate C₁ in % | Thickness H₂ (µm) | Thickness H₃ (µm) | Coverage Rate C₂ in % |
| Example 1 | 0.8 | 40% | 2 | 0.7 | 50% |
| Example 2 | 0.5 | 40% | 2 | 0.5 | 50% |
| Example 3 | 1.5 | 40% | 3 | 1 | 50% |
| Example 4 | 0.8 | 40% | 2 | 0.7 | 50% |
| Example 5 | 0.8 | 40% | 2 | 0.7 | 50% |
| Example 6 | 0.5 | 40% | 2 | 0.5 | 60% |
| Example 7 | 1.5 | 50% | 3 | 1 | 50% |
| Example 8 | 0.8 | 40% | 2 | 0.7 | 50% |
| Example 9 | 0.8 | 40% | 2 | 0.7 | 50% |
| Example 10 | 1.5 | 40% | 3 | 0.5 | 50% |
| Example 11 | 0.8 | 30% | 2 | 0.7 | 50% |
| Example 12 | 0.5 | 40% | 1.5 | 0.5 | 50% |
| Example 13 | 0.5 | 40% | 2 | 0.5 | 40% |

**Table 2**

| | Primary Particle size of PVDF (nm) | Primary Particle size of Polyacrylate (nm) | Dᵥ₅₀ of Bimetallic Oxide (nm) | Diameter of Fibrous PI (nm) | Length of Fibrous PI (nm) | Bimetallic Oxide : PI |
|---|---|---|---|---|---|---|
| Example 1 | 190 | 300 | 300 | 150 | 700 | 1.5:1 |
| Example 2 | 150 | 150 | 300 | 150 | 700 | 1.5:1 |
| Example 3 | 300 | 450 | 300 | 150 | 700 | 1.5:1 |
| Example 4 | 190 | 300 | 300 | 150 | 700 | 2:1 |
| Example 5 | 190 | 300 | 300 | 150 | 700 | 1.3:1 |
| Example 6 | 150 | 120 | 300 | 150 | 700 | 1.5:1 |
| Example 7 | 300 | 450 | 300 | 150 | 700 | 1.5:1 |
| Example 8 | 190 | 300 | 300 | 100 | 900 | 1.5:1 |
| Example 9 | 190 | 300 | 500 | 150 | 700 | 1.5:1 |
| Example 10 | 150 | 120 | 300 | 150 | 700 | 1.5:1 |
| Example 11 | 190 | 300 | 300 | 150 | 700 | 1.5:1 |
| Example 12 | 150 | 150 | 300 | 150 | 700 | 1.5:1 |
| Example 13 | 120 | 120 | 300 | 150 | 700 | 1.5:1 |

### Comparative Example 1

The battery separator commercially available from Shanghai Energy New Materials Technology Co., Ltd. was selected and used. As shown in FIG. 2, the battery separator in this comparative example includes:
a base membrane 10, being a wet-process base membrane, having a thickness of 9 µm and a porosity of 40%;
a first bonding layer 20, having a thickness of 1 µm and made of PVDF powder; and
a heat-resistant layer 30, having a thickness of 2 µm and made of a mixed material of boehmite and a spherical polyacrylate material with a primary particle size of 4 µm to 7 µm.

A battery was prepared using the above battery separator by the conventional method.

The batteries prepared in the above examples and comparative example were subjected to formation and grading, and tested from strength performance and safety performance.

Strength performance test methods were performed as follows.

### (1) Bonding Force Test:

The bonding force test was carried out by folding the separators. The test was performed under conditions at a temperature of 90 °C and at a surface pressure of 1 MPa for 60 s.

(2) Thermal Shrinkage Test: It was performed in accordance with GB/T 36363-2018, and the test temperatures were 130 °C/h and 150 °C/h.

(3) Membrane Rupture Temperature Test: It was performed using the TMA test method, with the temperature being raised from room temperature of 25 °C.

The safety performance test methods were performed as follows.

### (1) Thermal Propagation Test:

The cells were charged at 1C constant current and constant voltage to 3.65 V, with a cutoff current of 0.05 C, to reach 100% SOC.

Two cells were fixed with a fixture. A heating plate was fixed on the positive electrode side of the first cell. The cell was heated until thermal runaway occurred in the cell. The heating was then stopped, and the thermal propagation time was recorded.

### (2) Hot Box Test:

The cells were charged at 0.5 C constant current and constant voltage to 4.2 V, and switched to a constant voltage of 4.2 V at 0.05 C. Data (V/T/I) during charging were recorded, and the voltage and internal resistance of the cells were measured and recorded.

The outside of the cells was fixed with a glass fixture.

The temperature box was raised from the ambient test temperature to 130 °C ± 2 °C at a rate of 5 °C/min and held at this temperature for 30 min, subsequently raised to 135 °C ± 2 °C and held at this temperature for 30 min, and subsequently raised to 140 °C ± 2 °C and held at this temperature for 30 min, and so on, until thermal runaway of the battery occurred.

The detected test results were listed in Table 3.

**Table 3**

| | Bonding Force of Separator to Negative Electrode Side N/m | Bonding Force of Separator to Positive Electrode Side N/m | MD Heat Shrinkage 130 °C/h% | TD Heat Shrinkage 130 °C/h% | MD Heat Shrinkage 150 °C/h% | TD Heat Shrinkage 150 % °C/h | Membrane Rupture Temperature °C | Thermal Propagation Time Interval/min | Hot Box Test |
|---|---|---|---|---|---|---|---|---|---|
| Comparative Example | 2 | 9 | 7.6 | 5.6 | >20 | >20 | 152 | 3 min 02 sec | pass at 130°C |
| Example 1 | 4 | 10 | 2.6 | 1.5 | 8.2 | 7.3 | 220 | 6 min 41 sec | pass at 180°C |
| Example 2 | 4.3 | 10.1 | 2.3 | 1.4 | 7.9 | 7 | 210 | 6 min 21 sec | pass at 180°C |
| Example 3 | 3.8 | 9.7 | 2.2 | 1.2 | 8.5 | 7.5 | 218 | 6 min 51 sec | pass at 180°C |
| Example 4 | 3.9 | 9.7 | 1.8 | 1 | 7.1 | 6.3 | 202 | 7 min 21 sec | pass at 175°C |
| Example 5 | 4.5 | 10.5 | 1.5 | 1 | 6.9 | 5.9 | 230 | 7 min 50 sec | pass at 185°C |
| Example 6 | 5 | 10 | 2.3 | 1.4 | 7.6 | 7 | 210 | 6 min 21 sec | pass at 180°C |
| Example 7 | 3.7 | 12 | 2 | 1.2 | 8.2 | 7.2 | 210 | 6 min 51 sec | pass at 180°C |
| Example 8 | 3.4 | 8.7 | 1.9 | 1.2 | 7.8 | 6.9 | 225 | 7 min 11 sec | pass at 180°C |
| Example 9 | 4 | 10 | 3.4 | 1.8 | 8.8 | 7.9 | 220 | 6 min 41 sec | pass at 180°C |
| Example 10 | 4.5 | 10.5 | 1.5 | 1 | 6.2 | 5.4 | 250 | 8 min 50 sec | pass at 190°C |
| Example 11 | 4 | 8.7 | 2.3 | 1.6 | 8.5 | 8 | 219 | 6 min 31 sec | pass at 180°C |
| Example 12 | 4 | 10 | 3.2 | 2 | 9 | 8.9 | 200 | 6 min 1 sec | pass at 175°C |
| Example 13 | 3 | 10 | 2 | 1.5 | 7.5 | 6.8 | 209 | 6 min 11 sec | pass at 180°C |

It can be seen from the test results in Table 3 that the battery separator structure provided in the solution of the present application has relatively good bonding force and heat resistance performance. When the thicknesses and coverage rates of the first bonding layer 20, the heat-resistant layer 30, and the second bonding layer 40 simultaneously satisfy H2>H1+H3, C2=(0.6 to 1.2)*(H1+H3)/H2%, and C1=(0.1 to 0.3)*H2/H1%, the bonding force of the battery separator, particularly the force of bonding to the negative electrode side, can be greatly enhanced. Meanwhile, the prepared battery also exhibits significant improvements in various heat resistance properties such as thermal shrinkage performance and membrane rupture temperature, and thus can meet the demands of products with higher safety requirements.

A battery separator, a preparation method therefor, a battery, and an electric device provided in the embodiments of the present application have been described in detail above. Specific examples are applied in the present application to illustrate the principles and implementations of the present application. The description of the above embodiments is merely intended to facilitate understanding of the technical solutions and core concepts of the present application. Those ordinarily skilled in the art should understand that they could still modify the technical solutions described in the foregoing embodiments or make equivalent substitutions for some of the technical features thereof. Such modifications or substitutions do not cause the essence of the corresponding technical solutions to depart from the scope of the technical solutions of various embodiments of the present application.

Reference Numerals: 10-base membrane, 20-first bonding layer, 30-heat-resistant layer, and 40-second bonding layer.

## Claims

1. A battery separator, comprising:
a base membrane;
a first bonding layer, located on a side of the base membrane, the first bonding layer having a first thickness H1 in µm, and the first bonding layer having a first coverage rate C1 in % with respect to the base membrane;
a heat-resistant layer, located on a side of the base membrane away from the first bonding layer, the heat-resistant layer having a second thickness H2 in µm; and
a second bonding layer, located on a side of the heat-resistant layer away from the base membrane, the second bonding layer having a third thickness H3 in µm, and the second bonding layer having a second coverage rate C2 in % with respect to the heat-resistant layer,
wherein H2>H1+H3, C2=(0.6 to 1.2)*(H1+H3)/H2%, and C1=(0.1 to 0.3)*H2/H1% are satisfied.

2. The battery separator as claimed in claim 1, wherein the battery separator satisfies at least one of following characteristics:
the first thickness H1 of the first bonding layer ranges from 0.5 µm to 1.5 µm;
the second thickness H2 of the heat-resistant layer ranges from 1.5 µm to 3 µm; and
the third thickness H3 of the second bonding layer ranges from 0.5 µm to 1 µm.

3. The battery separator as claimed in any one of claims 1 and 2, wherein the battery separator satisfies at least one of following characteristics:
the first coverage rate C1 ranges from 30% to 50%; and
the second coverage rate C2 ranges from 40% to 60%.

4. The battery separator as claimed in any one of claims 1 to 3, wherein the battery separator satisfies at least one of following characteristics:
a material of the first bonding layer comprises polyvinylidene fluoride;
a material of the heat-resistant layer comprises a bimetallic oxide and fibrous polyimide; and
a material of the second bonding layer comprises a non-fluorine polyacrylate.

5. The battery separator as claimed in claim 4, wherein the polyvinylidene fluoride has a primary particle size ranging from 100 nm to 300 nm.

6. The battery separator as claimed in any one of claims 4 and 5, wherein the battery separator satisfies at least one of following characteristics:
a mass ratio of the bimetallic oxide to the fibrous polyimide is (1.3 to 3):1;
the bimetallic oxide is a zinc-aluminum oxide or a magnesium-aluminum oxide;
the bimetallic oxide has a Dv50 ranging from 200 nm to 500 nm;
a length-to-diameter ratio of the fibrous polyimide ranges from 2.5 to 10; and
a diameter of the fibrous polyimide ranges from 100 nm to 200 nm, and a length of the fibrous polyimide ranges from 500 nm to 1000 nm.

7. The battery separator as claimed in any one of claims 4 to 6, wherein the battery separator satisfies at least one of following characteristics:
the non-fluorine polyacrylate comprises one or more of styrene-methyl methacrylate copolymer, styrene-ethyl acrylate copolymer, and homopolymer or copolymer of 2-ethylhexyl acrylate; and
the non-fluorine polyacrylate has a primary particle size ranging from 200 nm to 500 nm.

8. A preparation method for a battery separator, comprising steps of:
providing a base membrane;
preparing a first bonding layer, the first bonding layer being located on a side of the base membrane;
preparing a heat-resistant layer, the heat-resistant layer being located on a side of the base membrane away from the first bonding layer; and
preparing a second bonding layer, the second bonding layer being located on a side of the heat-resistant layer away from the base membrane,
wherein thicknesses of the base membrane, the first bonding layer, the heat-resistant layer, and the second bonding layer satisfy:
H2>H1+H3, C2=(0.6 to 1.2)*(H1+H3)/H2%, and C1=(0.1 to 0.3)*H2/H1%.

9. A battery, comprising a positive electrode sheet, a negative electrode sheet, and a battery separator, wherein
the battery separator is the battery separator as claimed in any one of claims 1 to 7; or the battery separator is prepared by the preparation method for the battery separator as claimed in claim 8.
